# EUROPÄISCHE PATENTSCHRIFT

(11) **EP 1 748 338 B1**
(45) Veröffentlichungstag und Bekanntmachung des Hinweises auf die Patenterteilung: **02.03.2011**
(21) Anmeldenummer: 05016465.6
(22) Anmeldetag: 28.07.2005
(51) Int. Cl.: G05B 19/418, H04L 12/40

(54) **Verfahren zur Optimierung der Bandbreitenausnutzung bei Bussystemen**
Method for optimizing bandwidth usage in bus systems
Méthode d'optimisation l'utilisation de la largeur de bande dans des systèmes de bus

(43) Veröffentlichungstag der Anmeldung: 31.01.2007
(73) Patentinhaber: SIEMENS AKTIENGESELLSCHAFT, 80333 München (DE)
(72) Erfinder: Albrecht, Andreas, 92712 Pirk (DE); Lomakin, Dimitri, Dr., 90411 Nürnberg (DE); Steindl, Günter, 92284 Poppenricht (DE)

(56) Entgegenhaltungen:
- DE-A1- 19 721 740
- US-A1- 2004 141 517
- VITTURI S: "DP-Ethernet: the Profibus DP protocol implemented on Ethernet" COMPUTER COMMUNICATIONS, ELSEVIER SCIENCE PUBLISHERS BV, AMSTERDAM, NL, Bd. 26, Nr. 10, 20. Juni 2003 (2003-06-20), Seiten 1095-1104, XP004425084 ISSN: 0140-3664
- TOVAR E ET AL: "Cycle time properties of the PROFIBUS timed-token protocol" COMPUTER COMMUNICATIONS, ELSEVIER SCIENCE PUBLISHERS BV, AMSTERDAM, NL, Bd. 22, Nr. 13, 25. August 1999 (1999-08-25), Seiten 1206-1216, XP004178581 ISSN: 0140-3664

## Beschreibung

Die Erfindung betrifft ein Verfahren zur Optimierung der effektiven Datenübertragungsrate in einem Bussystem, insbesondere in der Automatisierungstechnik. Die Erfindung betrifft weiter ein Automatisierungssystem, welches unter Verwendung eines derartigen Verfahrens zur Optimierung der effektiven DatenübertragUhgsrate in einem Bussystem mit miteinander kommunizierenden Automatisierungsgeräten vorgesehen ist.

Ein Verfahren, bei dem das Bussystem einen Master und mindestens einen Slave aufweist, die Datenübertragung mittels Datentelegrammen eines übergeordneten Datennetzes, insbesondere eines auf dem Internetprotokoll basierenden Datennetzes, vorgesehen ist, das Datentelegramm ein Datensegment enthält, welches für Nutzdaten vorgesehen ist, das Datensegment für Nutzdaten mindestens einen Datenabschnitt enthält, der für den Master und/oder die Slaves vorgesehen ist, die Datentelegramme durch den Master generiert und/oder verändert und/oder gelöscht werden, kommt bei Bussystemen, auch Datenbussysteme genannt, wie zum Beispiel Feldbussysteme, zum Einsatz, die Internetprotokoll fähig sein sollen, um den direkten Datenverkehr in das Internet, Corporate Netzwerk oder ähnliche übergeordnete Datennetze zu garantieren, wobei die Bussysteme auf einer Eingabe/Ausgabe Ebene arbeiten, wie beispielsweise PROFINET oder ähnliche Systeme, die für Automatisierungssysteme anwendbar sind. Auf diese Weise sollen beispielsweise Automatisierungskomponenten, Sensoren, Aktuatoren oder ähnliche technische Komponenten direkt aus dem übergeordneten Datennetz (Internet, etc.) steuerbar, beziehungsweise Daten austauschbar sein.

Unter dem Begriff Automatisierungssystem ist hier sowie im gesamten Dokument ein System zu verstehen, welches mit Hilfe technischer Mittel bestimmte Operationen ohne Einflussnahme des Menschen teilweise oder ganz nach vorgegebenen Programmen durchführt. Operationen bezeichnen in diesem Zusammenhang z. B Fertigungsprozesse, Monatageprozesse, Transportprozesse, Prozesse zur Qualitätskontrolle etc., die insbesondere im industriellen Umfeld ablaufen.

Umgekehrt werden auch Internettechnologien im Bussystem verfügbar. Somit fügt diese Technologie das Internet und das Bussystem für den Anwender virtuell zu einem Netz zusammen, wobei die Transparenz des Bussystems nachhaltig erhöht wird.

Das gegenwärtig wichtigste Protokoll zur Netzkopplung ist das Internetprotokoll, dessen Hauptaufgabe es ist die netzübergreifende Adressierung zu bewerkstelligen. Es verbessert jedoch kaum die Dienste der darunterliegenden Netze bzw. Schichten. Das Internetprotokoll arbeitet verbindungslos durch den Austausch von Datentelegrammen, die auch Datagramme oder Frames genannt werden. Datagramme bestehen dabei aus Datenpaketen, versehen mit einem IP-header, der Informationen betreffs Länge, Sender- und Empfängeradressen und Protokollbezeichner enthält.
Sender- und Empfängeradresse werden in 32-bit-Feldern angegeben und bestehen aus einer Angabe des Netzes und des darin befindlichen Anschlusses. Ein Datagramm weist dabei einen IP-header und ein IP-Datenfeld auf. Der IP-header enthält unter anderem die Adresse des End-Empfängers. Falls sich dieser in einem anderen Netz befindet als der Sender, ist keine direkte Versendung möglich, stattdessen wird ein Router (im Internet wird dieser auch Gateway genannt) im eigenen Netz angesprochen, der die Weiterleitung der Informationen anhand so genannter Routing-Tabellen übernimmt. Hierbei kann das Kapselungsprinzip angewendet werden, wobei das Datagramm des anderen Netzes im IP-Datenfeld gekapselt wird, um am Gateway für eine Weiterleitung im anderen Netz "entnommen" zu werden.

Aus WO 2004/071025 A1 ist ein Netzwerkkoppler bekannt, der einerseits mit einem Netzwerk verbunden ist, auf dem Ethernet-Telegramme übertragen werden können, und andererseits mit einer Mehrzahl von Teilnehmern verbunden ist, die über eine interne Schnittstelle mit dem Netzwerkkoppler verbunden sind. Zum Austausch von Daten wird ein über die externe Schnittstelle des Netzwerkkopplers empfangenes Ethernet-Telegramm an die interne Ethernet-Schnittstelle des Netzwerkkopplers weitergeleitet und auf dem ringförmigen Übertragungsweg ausgegeben, wobei jeder, an die Schnittstelle angeschlossener Teilnehmer, die für den jeweiligen Teilnehmer bestimmten Nutzdaten mit dem auf den ringförmigen Übertragungsweg umlaufenden Ethernet-Telegramm austauscht.

Aus der deutschen Offenlegungsschrift DE 197 21 740 A1 ist weiterhin ein Verfahren bekannt, bei dem eine zeitliche Synchronisation des Zugriffs auf einen seriellen Bus mit mehreren Teilnehmern derart erfolgt, dass von einem als Master ausgebildeten ersten Teilnehmer in zyklischer Folge Trigger-Telegramme gesendet werden, durch welche der Master ausgewählten Teilnehmern Beginn und Dauer einer Sendeberechtigung mitteilt. Im Anschluss an den Empfang eines solchen Trigger-Telegramms werden von den ausgewählten Teilnehmern Datentelegramme gesendet, wobei der zeitliche Ablauf hierbei durch die Trigger-Telegramme festgelegt ist.

Aus der Veröffentlichung "DP-Ethernet: the Profibus DP protocol implemented on Ethernet" von S. Vitturi, Computer Communications, Elsevier Science Publishers BV, Amsterdam, NL, Bd. 26, Nr. 10, 20. Juni 2003 (2003-06-20), Seiten 1095 - 1104 ist ferner die Möglichkeit bekannt, ein Ethernet-Netzwerk unter Verwendung des Profibus DP-Protokolls zu implementieren, wobei Daten von Slaves an einen Master gesendet werden.

Der Erfindung liegt die Aufgabe zugrunde, die effektive Bandbreitenausnutzung bei der Datenübertragung in Bussystemen, die auf einem Internetprotokoll basieren, insbesondere auf dem Gebiet der Automatisierungstechnik, zu erhöhen.

Diese Aufgabe wird erfindungsgemäß gelöst durch ein Verfahren zur Optimierung der effektiven Datenübertragungsrate in einem Bussystem, insbesondere in der Automatisierungstechnik, wobei das Bussystem einen Master und mindestens einen Slave aufweist, die Datenübertragung mittels Datentelegrammen vorgesehen ist, das Datentelegramm ein Datensegment enthält, welches für Nutzdaten vorgesehen ist, das Datensegment für Nutzdaten mindestens einen Datenabschnitt enthält, der für den Master und/oder die Slaves vorgesehen ist, die Datentelegramme durch den Master generiert und/oder verändert und/oder gelöscht werden und mindestens ein Datentelegramm, mindestens ein Datensegment und/oder mindestens ein Datenabschnitt durch mindestens einen Slave generiert und/oder verändert und/oder gelöscht wird, wobei der Slave dem Datentelegramm Daten entnimmt, die sich in einem für ihn bestimmten Datenabschnitt befinden, und einen neuen Datenabschnitt einfügt, der Input-Daten für den Master beinhaltet. Diese Aufgabe wird weiter gelöst durch ein Automatisierungssystem mit den im Anspruch 16 angegebenen Merkmalen.

Hierdurch wird eine Projektierung der Daten in den Datensegmenten und/oder den darin enthaltenen Datenabschnitten im Datentelegramm erreicht, wodurch die Topologie des Bussystems zum Erreichen einer effektiven Datenübertragungsrate berücksichtigt werden kann. Zusätzlich kann durch eine Zeitsynchronisation mit Hilfe der Datentelegramme selbst, anstatt mit speziell für die Synchronisation vorgesehenen Synchronisationstelegrammen, eine höhere effektive Datenübertragungsrate erzielt werden.

Der Erfindung liegt die Erkenntnis zugrunde, dass die Ethernet-Technologie immer mehr an Bedeutung in der Automatisierungstechnik gewinnt. Charakteristisch für Kommunikationsstrukturen in der Automatisierungstechnik ist die Kopplung von wenigen Verarbeitungseinheiten, des Weiteren auch Master genannt, und vielen Peripherieeinheiten, des Weiteren auch Slaves genannt. Dabei ist das Datenvolumen je Slave recht klein, die Übertragungshäufigkeit aber sehr hoch. Unter diesen Bedingungen machen sich die Protokolleigenschaften von Ethernet negativ bemerkbar. Das Bussystem ist somit Ethernet fähig, aber auf Kosten der effektiven Datenrate. Die effektive Datenrate sinkt, wegen der Mindestlänge eines Ethernet-Frames, sowie wegen der vorgeschriebenen Adress- und Zustandsinformationen, die zu dem so genannten Overhead und nicht zu den Nutzdaten zählen. Die Kommunikationsstrecken, die entweder zum Master hin oder vom Master wegführen, sind besonders betroffen und erweisen sich als Flaschenhals im Kommunikationsdurchsatz. Weiterhin gibt es Lösungen für das Flaschenhalsproblem, die allerdings die Vorgaben seitens des Ethernet bei der Übertragung verletzen. Aus diesem Grund ist dort der Einsatz bzw. das Ankoppeln von Ethernet-Standardkomponenten nicht ohne Zusatzaufwand möglich.

Mit dem Verfahren zur Optimierung der effektiven Datenübertragungsrate in einem Bussystem, ist es einem Teilnehmer möglich mindestens ein Datentelegramm, mindestens ein Datensegment und/oder mindestens ein Datenabschnitt zu generieren und/oder zu verändern und/oder zu löschen. Zu den Teilnehmern des Bussystems zählen hierbei der Master, der den Takt des Bussystems vorgibt und der auch mit einem übergeordneten Netz, wie zum Beispiel dem Internet kommuniziert. Innerhalb des Bussystems gibt der Master den Takt vor, hat aber abgesehen von diesem Merkmal die gleichen Rechte hinsichtlich der Erzeugung, Änderung und Löschung der Datentelegramme wie ein Slave. Auf diese Weise ist es möglich die Optimierung der effektiven Datenrate hinsichtlich der jeweiligen Struktur beziehungsweise Topologie des Bussystems zu optimieren. Die Anpassung an die jeweilige Topologie führt zu einer bestimmten Unterteilung des Datensegmentes der Nutzdaten des Datentelegramms, die für jede Übertragung von einem Teilnehmer zum nächsten unterschiedlich festgelegbar ist. Dadurch ist das Verfahren höchst flexibel und kann auf eine Vielzahl von Topologien, zum Beispiel, linienförmige, ringförmige, sternförmige, und mögliche Kombinationen derselben angewandt werden.

Ein Automatisierungssystem mit über ein Bussystem kommunizierende Automatisierungsgeräte, wobei ein erstes Automatisierungsgerät als Master und mindestens ein zweites Automatisierungsgerät als Slave ausgebildet ist, profitiert von mindestens einem Slave zur Generierung und/oder Veränderung und/oder Löschung mindestens eines Datentelegrammes, mindestens ein Datensegmentes und/oder mindestens eines Datenabschnittes in der Art, dass die effektive Datenrate des Bussystems erhöht wird, und die Kontrolle beziehungsweise Steuerung der Automatisierungsgeräte schneller stattfindet. Hierdurch wird unnütze Wartezeit der Automatisierungsgeräte auf Steuerbefehle vermieden und führt zu einer deutlichen Produktionssteigerung.

Das Datentelegramm erhält im Bussystem sozusagen einen Rundbriefcharakter, wobei der Rundbrief von den Lesern bzw. Nachbarn bzw. Slaves veränderbar ist. Dieses Verfahren ist auch in die umgekehrte Richtung (vom Slave zum Master) anwendbar, wobei hier jeder Teilnehmer seine Daten hinzufügt und das Datentelegramm mit den für ihn nicht relevanten Teilen weitersendet. Die Strukturierung des Teils des Datentelegramms, der für die Nutzdaten vorgesehen ist, wird auf die jeweilige Topologie abgestimmt.

Eine weitere Optimierung der effektiven Datenübertragung zwischen den Teilnehmern ist durch die Taktsynchronisation des Verfahrens möglich. Verfahrensgemäß werden die jeweiligen Sendezeitpunkte der einzelnen Teilnehmer so koordiniert, dass die Daten des benachbarten Slaves jeweils zum optimalen Zeitpunkt für den eigenen Sendevorgang eintreffen. Hierbei ist es auch möglich, Fehlerinformationen weiterzugeben, falls die Datentelegramme nicht rechtzeitig vorliegen. Basierend auf den Fehlerinformationen kann das Feldbussystem die Sendezeitpunkte der jeweiligen Nachbarn optimieren. Zur Optimierung werden die Datentelegramme verwendet. Ziel ist es die Zeitsynchronisation der beteiligten Komponenten nach einem Hochlauf mit relativ grober Synchronisation während des Betriebes zu verfeinern und weiterhin aufrecht zu erhalten. Für die einzelnen Komponente bedeutet dies, dass wenn ein Frame empfangen wird, der von einer Komponente mit höherwertiger Uhrzeit stammt, dieser Zeitpunkt mit dem Sollzeitpunkt verglichen und die eigene Uhr entsprechend korrigiert wird. Hierbei wird die höherwertige Uhrzeit der anderen Komponente bzw. des Nachbarn aus dem empfangenen Ethernetframe ausgelesen. Somit ist die höherwertige Uhrzeit durch die Projektierung bekannt. Für jede mögliche Topologie des Feldbussystems ist es möglich, für jeden Teilnehmer einen Nachbarn zu definieren, der für den Teilnehmer die Uhrzeit vorgibt. Auf diese Weise ergibt sich eine zeitliche Hierarchie unter den Teilnehmern, die es ermöglicht, aus jeder beliebigen Anfangssituation des Leitbussystems stets in den zeitsynchronen Modus überzugehen. Erfindungsgemäß steht das zweite Verfahren in direkte Abhängigkeit zum ersten Verfahren, da es die oben genannte, höherwertige Uhrzeit, oder auch Zeitstempel genannt, des Nachbarn für die eigentliche Synchronisation benötigt, wobei der Zeitstempel innerhalb der Nutzdaten des Ethernet-Frames zur Verfügung gestellt werden muss.

Durch das beschriebene Verfahren verringert sich die Anzahl der Datentelegramme, oder Frames, besonders auf der kritischen Strecke unmittelbar an der Verarbeitungseinheit (Master) deutlich (im Idealfall auf ein Datentelegramm) und die protokollbedingten Nachteile werden somit dramatisch reduziert. Ein weiterer Vorteil der Zeitsynchronisation ist neben der hohen Bandbreiteneffizienz ein sehr kurzer äquidistanter Übertragungszyklus.

Eine vorteilhafte Ausgestaltungsform des Verfahrens zur Optimierung der effektiven Datenübertragungsrate in einem Bussystem ist ein Verfahren wobei ein Teilnehmer das Datentelegramm an den benachbarten Teilnehmer übermittelt. Bei der Vernetzung der benachbarten Teilnehmer werden die kürzest möglichen Distanzen überbrückt, wobei die entstehende Topologie sekundär ist. Die Topologie wird dann im Datentelegramm berücksichtigt. Man muss keine langen Übertragungswege in Kauf nehmen, die nur bei festgelegter Topologie entstehen (ringförmig, linear, etc.). Folglich werden die Laufzeiten der Datentelegramme zwischen den Teilnehmern minimiert.

Da ein Teilnehmer den Endempfänger nicht direkt adressiert, sondern immer nur seinen benachbarten Teilnehmer auf dem Weg zu dem Endempfänger, wird durch die gemeinsame Nutzung des Datentelegramms die Zahl der Datentelegramme drastisch reduziert. Im Idealfall auf ein Datentelegramm pro Verbindungsstrecke. Insbesondere auf den Verbindungsstrecken zum Master, oder auch Verarbeitungseinheit genannt, wirkt sich diese Datentelegrammreduzierung positiv aus.

Eine weitere vorteilhafte Ausgestaltungsform ist ein Verfahren, wobei der Slave Messdaten und/oder Zustandsdaten und/oder Steuerbefehle und/oder Prozessdaten in mindestens einem Datenabschnitt des Datentelegramms ablegt. D.h. es ist möglich mit anderen Teilnehmern zu kommunizieren, oder auch deren zugeordneten Datenabschnitt im Datentelegramm bei Bedarf mitzubenutzen. Die Projektierung der Daten ist somit nicht einzig von der Topologie abhängig, sondern kann sich ebenfalls nach anderen automatisierungstechnischen Gesichtspunkten richten.

Eine weitere vorteilhafte Ausgestaltungsform ist ein Verfahren, wobei die Topologie des Bussystems mindestens teilweise eine lineare, ringförmige und/oder baumartige Struktur ausbildet. Die Topologie kann hierbei nach anderen Kriterien ausgewählt werden, als die Position der Teilnehmer zueinander. Beispielsweise kann entsprechend der Anwendung eine baumartige, vorsortierte Topologie zu einem schnellen Kontaktieren eines bestimmten Teilnehmers führen.

Bei einer weiteren vorteilhaften Ausgestaltungsform werden die Datentelegramme zur Takt-Synchronisation des Bussystems verwendet. Durch eine Zeitsynchronisation können äquidistante Übertragungszyklen erreicht werden. Durch die Nutzung des projektierbaren Datentelegramms für die Zeitsynchronisation werden im Betrieb zusätzlich Datentelegramme zur Synchronisation eingespart. Jeder Teilnehmer ist in der Lage seinen eigenen Takt mit dem des benachbarten Teilnehmers zu vergleichen, und unter Berücksichtigung der festen Datentelegrammlaufzeiten zwischen den Teilnehmern ist eine Zeitsynchronisation zum Master möglich. Die Teilnehmer führen zuerst eine Takterkennung und anschließend ihre eigene Zeitsynchronisation aus.

Weitere vorteilhafte Ausführungen und bevorzugte Weiterbildungen der Erfindung sind den Unteransprüchen zu entnehmen.

Im Folgenden wird die Erfindung anhand der in den Figuren dargestellten Ausführungsbeispiele näher beschrieben und erläutert.

Es zeigen:
- FIG 1: eine zeitliche Strukturierung eines herkömmlichen Ethernet Datentelegramms,
- FIG 2: ein Feldbussystem linearer Topologie eines ersten Ausführungsbeispiels,
- FIG 3: Datentelegramme zum ersten Ausführungsbeispiel aus Figur 2,
- FIG 4: ein Feldbussystem zirkularer Topologie eines zweiten Ausführungsbeispiels,
- FIG 5: Datentelegramme zum zweiten Ausführungsbeispiel aus Figur 4,
- FIG 6: ein Feldbussystem sternförmiger Topologie eines dritten Ausführungsbeispiels,
- FIG 7: Datentelegramme zum dritten Ausführungsbeispiel aus Figur 6,
- FIG 8: zwei Teilnehmer eines Feldbussystems eines vierten Ausführungsbeispiels, und
- FIG 9: eine mögliche zeitliche Abfolge eines Synchronisationsvorgangs der Datentelegramme der beiden Teilnehmer des in Figur 8 gezeigten vierten Ausführungsbeispiels.

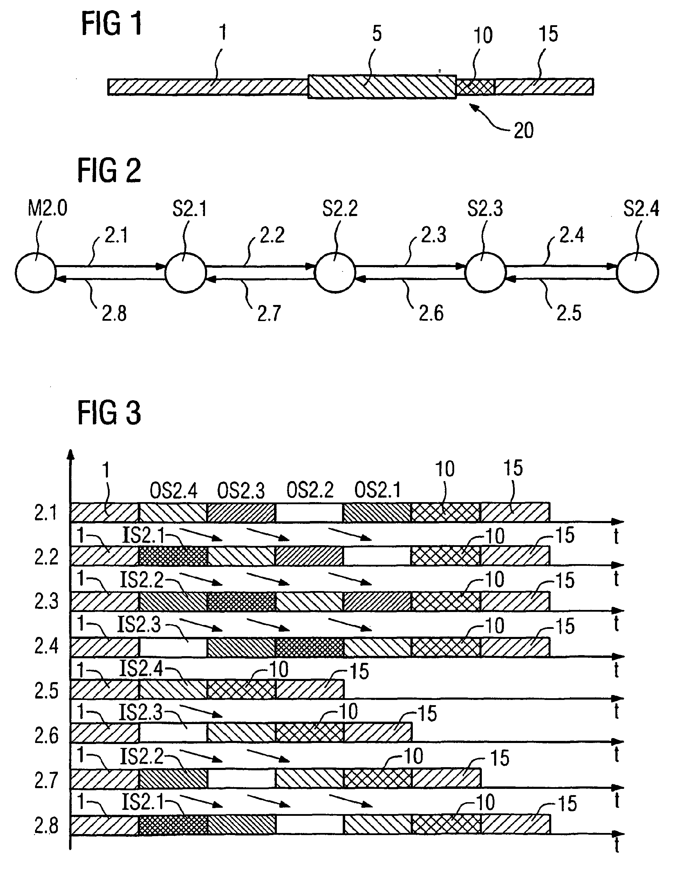

Figur 1 zeigt eine zeitliche Strukturierung eines herkömmlichen Ethernet Datentelegramms, wie er von den meisten Internetprotokoll-basierenden Netzen genutzt wird. Das erste Datensegment ist der so genannte Header (HDR) 1, der die Ethernet-Zieladresse als auch die Ethernet-Quelladresse enthält. Darauf folgt das Datensegment 5 der Nutzdaten, die 46 bis 1500 Bytes beinhalten kann. Danach folgt ein Datensegment 10, das insgesamt vier Byte einnimmt und die so genannte Prüfsumme (CRC) enthält. Diese Prüfsumme wird vom sendenden Teilnehmer erstellt, indem eine CRC-Berechnung über die gesamte Bitfolge der vorgehenden Datensegmenten erstellt wird. Dadurch ist der Empfänger in der Lage, durch dieselbe Berechnung den Inhalt der CRC-Prüfsumme zu verifizieren. Stimmen die Werte nicht überein, geht der Empfänger von einer fehlerhaften Übertragung aus und der Frame wird verworfen. Das vierte Datensegment 15 beinhaltet Nullen und Einsen die zur so genannten Kollisionserkennung verwendet werden. Die Datensegmente 1, 10 und 15 werden im Allgemeinen als Overhead bezeichnet im Gegensatz zum Datensegment 5 der Nutzdaten.

Figur 2 zeigt ein Feldbussystem linearer Topologie eines ersten Ausführungsbeispiels mit einem Master M2.0 und vier Slaves (S2.1, S2.2, S2.3 und S2.4). Figur 2 ist in Zusammenhang mit Figur 3 zu betrachten, wobei in Figur 3 die Datentelegramme verdeutlicht sind, die in der Topologie in Figur 2 verwendet werden. Es wird angenommen, dass alle fünf Teilnehmer, das heißt, die Verarbeitungseinheit (Master) und die vier Peripherieeinheiten (Slaves) gleichzeitig mit der Versendung von Datentelegrammen beginnen. In der Praxis können auch zeitlich versetzte Startpunkte vereinbart werden. Das für Nutzdaten vorgesehene Datensegment 5 wird in diesem Ausführungsbeispiel unterteilt. In der linearen Topologie werden zunächst die Nachbarn der höherwertigen Uhrzeit festgelegt. Es ist vorteilhaft, jeweils den linken Nachbarn als Referenz anzusehen. Das heißt, im Einzelnen, dass sich der betreffende Slave bzw. Teilnehmer S2.1 nach dem Takt des Masters M2.0 richtet bzw. der Teilnehmer S2.2 nach dem Takt seines Nachbarn S2.1 usw. Die zeitliche Hierarchie ist damit in Abhängigkeit von der Topologie des Feldbussystems festgelegt.

Figur 3 zeigt Datentelegramme zum ersten Ausführungsbeispiel aus Figur 2. Die Datenabschnitte, die innerhalb des Datensegmentes 5 der Nutzdaten angeordnet werden, können den Buchstaben O für Output bzw. I für Input tragen. Output und Input beziehen sich hierbei, wie auch in den folgenden Figuren, stets auf den Master. In den Datensegmenten 1, 10 und 15 ist der Overhead zusammengefasst. Das Datensegment der Nutzdaten 5 ist in diesem Beispiel in vier Datenabschnitte geteilt worden (OS2.4, OS2.3, OS2.2 und OS2.1). Diese Abschnitte enthalten Informationen, Befehle oder Daten, die vom Master M2.0 an den jeweiligen Slave übersendet werden. Hierbei bezeichnet OS2.4 den Output an den Teilnehmer S2.4 bzw. OS2.3 bezeichnet den Output an den Teilnehmer S2.3 usw. Das Datentelegramm, das mit 2.1 bezeichnet wird, wird vom Master an den Teilnehmer S2.1 gesendet.

Der Teilnehmer S2.1 entnimmt dem Datentelegramm die Daten, die sich in dem für ihn bestimmten Abschnitt OS2.1 befinden. Weiterhin fügt er einen neuen Abschnitt, der die Bezeichnung IS2.1 trägt, und Input-Daten für den Master M2.0 beinhaltet, ein. Hierbei werden die Datenabschnitte innerhalb des Datensegmentes 5 der Nutzdaten zyklisch verschoben. Die Bezeichnung IS2.1 bezeichnet einen Input (Eingabedaten) von dem Teilnehmer S2.1 aus der Sicht des Masters M2.0 gesehen. Der Teilnehmer S2.2 verfährt nach dem gleichen Schema und entnimmt die Daten des Abschnittes OS2.2 und fügt einen neuen Abschnitt IS2.2 mit neuen Eingabedaten hinzu. Das Datentelegramm 2.5 beinhaltet lediglich Eingabedaten in dem Abschnitt IS2.4. Teilnehmer S2.3 verwendet die Daten dieses Abschnittes IS2.4 weiter und fügt einen weiteren Abschnitt IS2.3 in das Datentelegramm ein. Auf dieselbe Weise verfahren auch die Teilnehmer S2.2 und S2.1. Auf diese Weise enthält der Master M2.0 ein Datentelegramm, welches vier Abschnitte mit Eingabedaten der jeweils vier Teilnehmer enthält. Pro Zyklus wird an einer Punkt-zu-Punkt-Verbindung nur ein Datentelegramm verschickt, wodurch der so genannte Overhead nur einmal anfällt. Die Bandbreitenausnutzung wird auf diese Weise signifikant verbessert. Interessanterweise beeinflusst der Querverkehr bei der Linientopologie die Zykluszeit nicht. Weiterhin fallen die sonst üblichen Durchleiteverzögerungen in den Knoten nicht ins Gewicht. Dadurch können so genannte Full-Duplex-Verbindungen optimal ausgenutzt werden.

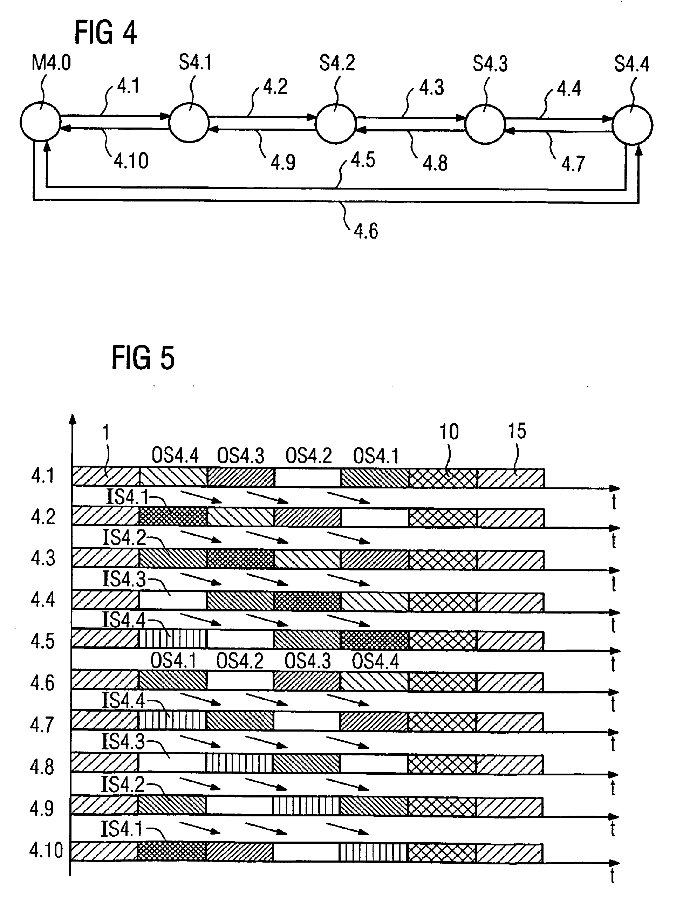

Figur 4 zeigt ein Feldbussystem zirkularer Topologie eines zweiten Ausführungsbeispiels. Das Feldbussystem besteht aus fünf Teilnehmern, davon ein Master M4.0 und vier Slaves S4.1, S4.2, S4.3 und S4.4. Die Datentelegramme, die zwischen den einzelnen Teilnehmern ausgetauscht werden, tragen die Bezeichnung 4.1 bis 4.10 und sind in Figur 5 detailliert beschrieben.

Figur 5 zeigt Datentelegramme zum zweiten Ausführungsbeispiel aus Figur 4. Die Datentelegramme 4.1 bis 4.5 entstehen in analoger Weise wie die ersten Datentelegramme im ersten Ausführungsbeispiel in Figur 3. Der entscheidende Unterschied besteht darin, dass der Master M4.0 nun zwei Nachbarn besitzt, weswegen er ein Datentelegramm in beide Richtungen verwenden kann. Aus diesem Grund hat das Datentelegramm 4.6, das von dem Master M4.0 an den Teilnehmer S4.4 gesendet wird, die gleiche Struktur wie das Datentelegramm 4.1. Dies bedeutet, dass das Telegramm 4.6 in der gleichen Weise nur antizyklisch behandelt wird wie das Datentelegramm 4.1. Jeder folgende Teilnehmer entnimmt die Daten aus dem Abschnitt, der ihm zugewiesen ist und fügt Daten hinzu, die von dem jeweiligen Teilnehmer an den Master M4.0 gelangen sollen. Dies bedeutet auch, dass der Master zwei Datentelegramme mit den gleichen Eingabeinhalten erhält. Diese Tatsache kann für Sicherheitszwecke die notwendige Redundanz schaffen, beispielsweise für den Fall, dass ein Teilnehmer ausfällt und den Ring unterbricht. Außerdem stehen die Daten in der zirkularen Topologie schneller zur Verfügung als vergleichsweise in der linearen Topologie des Ausführungsbeispiels 1.

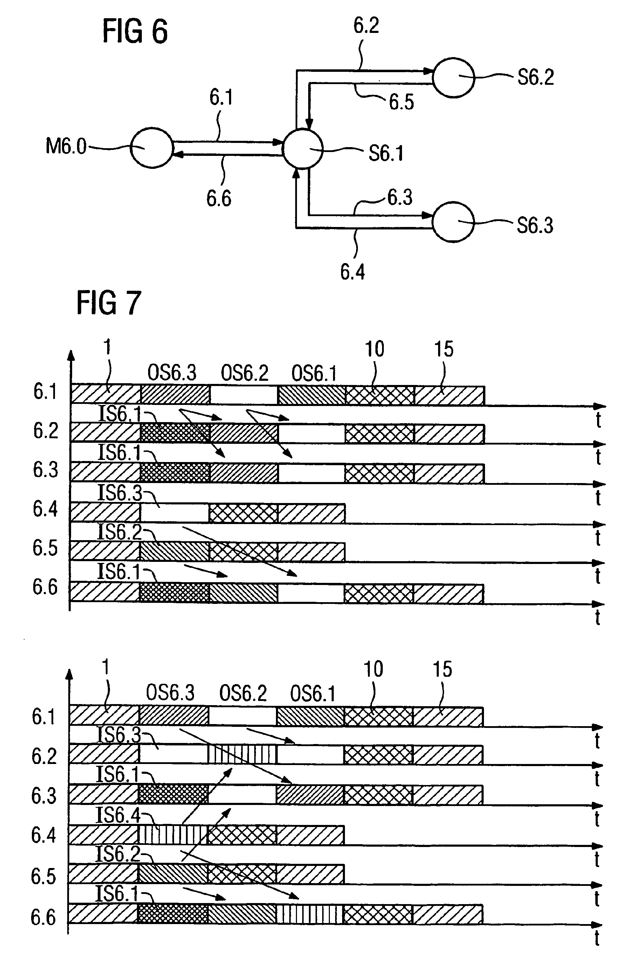

Figur 6 zeigt ein Feldbussystem sternförmiger Topologie eines dritten Ausführungsbeispiels. In diesem Beispiel gibt es einen Master M6.0 und drei Slaves S6.1, S6.2 und S6.3. Die zeitliche Hierarchie ist in diesem Ausführungsbeispiel eindeutig vorgegeben. Der Teilnehmer S6.1 richtet sich nach den Datentelegrammeingängen des Master M6.0 und die Teilnehmer S6.2 und S6.3 richten sich nach dem Teilnehmer S6.1.

Figur 7 zeigt Datentelegramme zum dritten Ausführungsbeispiel aus Figur 6. In zwei Diagrammen sind zwei mögliche Strukturierungen der zu verwendenden Datendiagramme der sternförmigen Topologie in Figur 6 ausgeführt. Wie bereits in den vorhergehenden Figuren verwendet, bezeichnen die Datensegmente 1, 10 und 15 den so genannten Overhead. Das Datensegment 5 der Nutzdaten ist im dritten Ausführungsbeispiel maximal in drei Abschnitte geteilt. Gemäß dem oberen Diagramm in Figur 7 erhält der Teilnehmer S6.1 das Datentelegramm 6.1 vom Master M6.0. Teilnehmer S6.1 entnimmt die Daten bzw. den Abschnitt OS6.1, der für den ihn bestimmt ist. Weiterhin fügt er bei der Generation der Datentelegramme 6.2 und 6.3 noch einen Abschnitt IS6.1 der Eingabedaten für den Master M6.0 hinzu. In anderen Worten, in diesem Ausführungsbeispiel sind 6.2 und 6.3 identisch. Die Teilnehmer S6.2 und S6.3 senden jeweils die Datentelegramme 6.4 und 6.5 aus, die nur einen Abschnitt IS6.3 bzw. IS6.2 in dem Datensegment 5 der Nutzdaten enthalten. Der Teilnehmer S6.1 integriert beide Abschnitte aus den Telegrammen 6.4 und 6.5 in das Datentelegramm 6.6 unter Hinzufügung eines neuen Abschnittes IS6.1. Auch in diesem Beispiel wird die Bandbreitenausnutzung signifikant verbessert, indem der Overhead nur einmal anfällt. Weiterhin beeinflusst der Querverkehr bei dieser zyklischen Topologie die Zykluszeit nicht. Weiterhin fallen die Durchleiteverzögerungen der Knoten nicht ins Gewicht, wodurch Full-Duplex-Verbindungen optimal unterstützt werden.

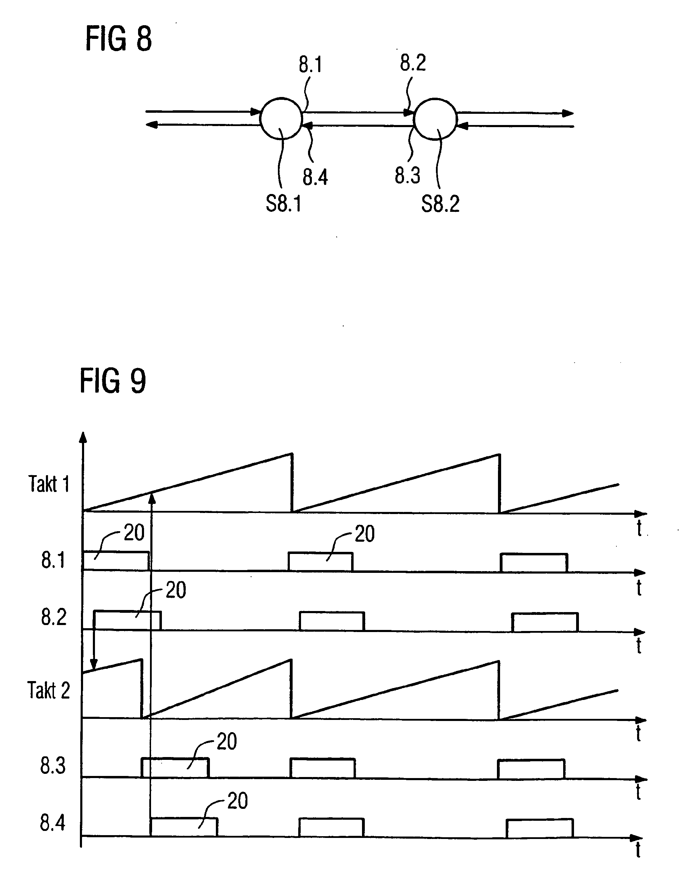

Figur 8 zeigt zwei Teilnehmer eines Feldbussystems eines vierten Ausführungsbeispiels. Hierbei ist der Teilnehmer S8.1 die zeitliche Referenz für den Teilnehmer S8.2. Dieses vierte Ausführungsbeispiel betrifft keine Feldbustopologie im Besonderen, sondern fokussiert auf das Verfahren der zeitlichen Synchronisation zweier benachbarter Teilnehmer. Des Weiteren wird davon ausgegangen, dass der Teilnehmer S8.1 optimal mit dem Feldbussystem bzw. mit dem Master (nicht gezeigt) synchronisiert ist. Die zeitliche Abfolge der versendeten Datentelegramme wird in Figur 9 verdeutlicht.

Figur 9 zeigt eine mögliche zeitliche Abfolge eines Synchronisationsvorgangs der Datentelegramme bzw. des Taktes der beiden Teilnehmer des in Figur 8 gezeigten vierten Ausführungsbeispiels. Da der Teilnehmer S8.1 in der Takt - Hierarchie höher steht, als der Teilnehmer S8.2 wird Teilnehmer S8.1 als bereits vollständig mit dem System-Takt, beziehungsweise mit dem Master-Takt, synchronisiert angesehen. Der Takt des Teilnehmers S8.1 ist deshalb beispielhaft als Referenz für Teilnehmer S8.2 zu sehen. Beide Teilnehmer messen die Zeitdifferenz zwischen dem Verschicken des eigenen Datentelegramms 20 und dem Empfang des Datentelegramms 20 vom Nachbarn. Für das Verschicken der Datentelegramme 20 folgen beide Teilnehmer jeweils ihrem eigenen Zähler, beziehungsweise dem eigenen Taktschlag (in Figur 8 als "Takt 1" und "Takt 2" bezeichnet), und speichern den Zählerstand zum Zeitpunkt des Empfanges des Datentelegramms vom Nachbarn ab. Diese Zeitpunkte sind in der Figur 8 mit Pfeilen gekennzeichnet. Für die folgende Taktkorrektur wird zusätzlich die tatsächliche Transmissionszeit der Telegramme zwischen beiden Teilnehmern berücksichtigt. Die so gewonnenen Informationen über die zeitliche Differenz der Takte wird im Datensegment der Nutzdaten 5 des Datentelegramms 20 dem jeweiligen Nachbarn mitgeteilt. Daraus entnimmt der hierarchisch untergeordnete Teilnehmer S8.2 seine Korrekturinformation. Nachdem die Korrekturinformation dem Teilnehmer S8.2 vorliegt, erzwingt dieser eine vorzeitige Taktgabe im Vergleich zum eigenen Takt, wodurch die Synchronisation zum Takt des benachbarten Teilnehmers S8.1 bewerkstelligt wird. Dieses Verfahren setzt voraus, dass die Teilnehmer gleichzeitig bzw. mit festem Zeitversatz zueinander ihre Echtzeitdatentelegramme verschicken (isochroner Betrieb, wie zum Beispiel bei ProfiNET IRT). Hierbei ist der feste Zeitversatz, der durch die Transmission zwischen den Teilnehmern verursacht wird, durch die Teilnehmer selbst, beziehungsweise durch das Verschicken der Datentelegramme 20 messbar. Alle Teilnehmer messen die zeitliche Differenz zwischen dem Verschicken des eigenen Telegramms an einen Port und dem Eintreffen vom Telegramm am selben Port (bei Full-Duplex-Strecken). Diese gemessene Differenz wird im laufenden Datentelegramm übertragen und auf diese Weise im gleichen Takt in der ganzen Taktdomäne verbreitet. Auf diese Weise kann jeder Teilnehmer die eigene zeitliche Differenz zum Master feststellen und entsprechend korrigieren bzw. nachregeln. Bei diesem Verfahren sind keine Synchronisierungstelegramme erforderlich, wodurch keine zusätzliche Busbelastung auftritt. Außerdem lässt sich eine sehr hohe zeitliche Genauigkeit erzielen, weil die für die Regelung erforderliche Information im laufenden Zyklus sehr aktuell vorliegt.

Zusammenfassend betrifft die Erfindung ein Verfahren zur Optimierung der effektiven Datenübertragungsrate in einem Bussystem, insbesondere in der Automatisierungstechnik, wobei das verwendete Datentelegramm in übergeordneten Datennetzen, die auf dem Internetprotokoll basieren, verwendbar ist, wobei mindestens ein Datentelegramm, mindestens ein Datensegment und/oder mindestens ein Datenabschnitt durch mindestens einen Slave generiert und/oder verändert und/oder gelöscht wird. Die Topologie des Bussystems ist hierbei gemäß der Applikation wählbar und wird in der Projektierung der in den Datentelegrammen enthaltenen Daten berücksichtigt, ohne die Protokolleigenschaften des übergeordneten Datennetzes zu verletzen. Die Anzahl der benötigten Datentelegramme wird dabei, insbesondere auf den Kommunikationsstrecken mit der höchsten Belastung deutlich reduziert.

## Patentansprüche

1. Verfahren zur Optimierung der effektiven Datenübertragungsrate in einem Bussystem (2), insbesondere in der Automatisierungstechnik, wobei
- das Bussystem (2) einen Master (M) und mindestens einen Slave (S) aufweist,
- die Datenübertragung mittels Datentelegrammen (20) vorgesehen ist,
- das Datentelegramm (20) ein Datensegment (5) enthält, welches für Nutzdaten vorgesehen ist,
- das Datensegment (5) für Nutzdaten mindestens einen Datenabschnitt (I,O) enthält, der für den Master (M) und/oder die Slaves (S) vorgesehen ist,
- die Datentelegramme (20) durch den Master (M) generiert und/oder verändert und/oder gelöscht werden und
- mindestens ein Datentelegramm (20), mindestens ein Datensegment und/oder mindestens ein Datenabschnitt (I,O) durch mindestens einen Slave (S) generiert und/oder verändert und/oder gelöscht wird, wobei der Slave
- dem Datentelegramm (20) Daten entnimmt, die sich in einem für ihn bestimmten Datenabschnitt befinden, und
- einen neuen Datenabschnitt einfügt, der Input-Daten für den Master (M) beinhaltet.

2. Verfahren nach Anspruch 1, wobei die Datenübertragung mittels Datentelegrammen (20) eines übergeordneten Datennetzes, insbesondere eines auf dem Internetprotokoll basierenden Datennetzes, vorgesehen ist.

3. Verfahren nach Anspruch 1 oder 2, wobei der Slave (S) das Datentelegramm (20) an den benachbarten Slave (S) oder den benachbarten Master (M) übermittelt.

4. Verfahren nach einem der vorhergehenden Ansprüche, wobei der Master (M) das Datentelegramm (20) an den benachbarten Slave (S) übermittelt.

5. Verfahren nach einem der vorhergehenden Ansprüche, wobei der Slave (S) Messdaten und/oder Zustandsdaten in mindestens einem Datenabschnitt (I,O) des Datentelegramms (20) ablegt.

6. Verfahren nach einem der vorhergehenden Ansprüche, wobei der Slave (S) Steuerbefehle und/oder Prozessdaten aus mindestens einem Datenabschnitt (I,O) des Datentelegramms (20) ausliest.

7. Verfahren nach einem der vorhergehenden Ansprüche, wobei der Master (M) Steuerbefehle und/oder Prozessdaten in mindestens einem Datenabschnitt (I,O) des Datentelegramms (20) ablegt.

8. Verfahren nach einem der vorhergehenden Ansprüche, wobei die Anordnung der Datenabschnitte (I,O) an die Topologie des Bussystems (2) angepasst wird.

9. Verfahren nach einem der vorhergehenden Ansprüche, wobei die Topologie des Bussystems (2) mindestens teilweise eine lineare, ringförmige und/oder baumartige Struktur ausbildet.

10. Verfahren nach einem der vorhergehenden Ansprüche, wobei die Datentelegramme (20) zur Takt-Synchronisation des Bussystems (2) verwendet werden.

11. Verfahren nach einem der vorhergehenden Ansprüche, wobei mindestens ein Teil der Slaves (S) und/oder der Master (M) mindestens ein Datentelegramm (20) zeitgleich an den benachbarten Slave (S) und/oder Master (M) übermitteln.

12. Verfahren nach einem der vorhergehenden Ansprüche, wobei mindestens ein Teil der Slaves (S) und/oder der Master (M) mindestens ein Datentelegramm (20) zeitgleich vom benachbarten Slave (S) und/oder Master (M) erhalten.

13. Verfahren nach einem der vorhergehenden Ansprüche, wobei der Slave (S) unter Berücksichtigung der Datentelegrammlaufzeit eine Abweichung des eigenen Taktes vom Takt des Masters (M) bestimmt.

14. Verfahren nach einem der vorhergehenden Ansprüche, wobei der Slave (S) unter Berücksichtigung der Datentelegrammlaufzeit und dem Zeitpunkt des Eintreffens eines Datentelegramms (20) und des eigenen Taktes die Abweichung vom Takt des Masters (M) bestimmt.

15. Verfahren nach einem der vorhergehenden Ansprüche, wobei der Slave (S) die Abweichung des eigenen Taktes vom Takt des Masters (M) selbsttätig korrigiert.

16. Automatisierungssystem mit über ein Bussystem (2) kommunizierenden Automatisierungsgeräten, wobei
- ein erstes Automatisierungsgerät als Master (M) und mindestens ein zweites Automatisierungsgerät als Slave (S) ausgebildet ist,
- die Datenübertragung mittels Datentelegrammen (20) vorgesehen ist,
- das Datentelegramm (20) ein Datensegment (5) enthält, welches für Nutzdaten vorgesehen ist,
- das Datensegment (5) für Nutzdaten mindestens ein Datenabschnitt (I,O) enthält, der für den Master (M) und/oder die Slaves (S) vorgesehen ist,
- der Master zur Generierung und/oder Veränderung und/oder Löschung der Datentelegramme (20) vorgesehen ist und
- mindestens ein Slave (S) zur Generierung und/oder Veränderung und/oder Löschung mindestens eines Datentelegramms (20), mindestens ein Datensegmentes und/oder mindestens eines Datenabschnittes (I,O) vorgesehen ist, wobei der Slave derart ausgebildet ist, dass er
- dem Datentelegramm (20) Daten entnimmt, die sich in einem für ihn bestimmten Datenabschnitt befinden, und
- einen neuen Datenabschnitt einfügt, der Input-Daten für den Master (M) beinhaltet.

17. Automatisierungssystem nach Anspruch 16, wobei die Datenübertragung mittels Datentelegrammen (20) eines übergeordneten Datennetzes, insbesondere eines auf dem Internetprotokoll basierenden Datennetzes, vorgesehen ist.

18. Automatisierungssystem nach Anspruch 16 oder 17, wobei mindestens ein Datenabschnitt (I,O) des Datentelegramms (20) für die Messdaten und/oder Zustandsdaten des Slaves (S) vorgesehen ist.

19. Automatisierungssystem nach einem der Ansprüche 16 bis 18, wobei mindestens einem Datenabschnitt (I,O) des Datentelegramms (20) für Steuerbefehle und/oder Prozessdaten des Slaves (S) vorgesehen ist.

20. Automatisierungssystem nach einem der Ansprüche 16 bis 19, wobei die Anordnung der Datenabschnitte (I,O) an die Topologie des Bussystems (2) angepasst ist.

21. Automatisierungssystem nach einem der Ansprüche 16 bis 20, wobei für die Topologie des Bussystems (2) mindestens teilweise eine lineare, ringförmige und/oder baumartige Struktur vorgesehen ist.

22. Automatisierungssystem nach einem der Ansprüche 16 bis 21, wobei die Datentelegramme (20) zur Takt-Synchronisation des Bussystems (2) vorgesehen sind.

## Claims

1. Method for optimising the effective data transmission rate in a bus system (2), in particular in automation technology, wherein
- the bus system (2) has a master (M) and at least one slave (S),
- data transmission is provided by means of data telegrams (20),
- the data telegram (20) contains a data segment (5) provided for user-data,
- the data segment (5) for user-data contains at least one data section (I,O) provided for the master (M) and/or the slaves (S),
- the data telegrams (20) are generated and/or modified and/or deleted by the master (M), and
- at least one data telegram (20), at least one data segment and/or at least one data section (I,O) is/are generated and/or modified and/or deleted by at least one slave (S), the slave
- taking from the data telegram (20) data which is present in a data section intended for it, and
- inserting a new data section which contains input data for the master (M).

2. Method according to claim 1, wherein data transmission is provided by means of data telegrams (20) of a higher-order data network, in particular a data network based on the internet protocol.

3. Method according to claim 1 or 2, wherein the slave (S) transmits the data telegram (20) to the adjacent slave (S) or the adjacent master (M).

4. Method according to one of the preceding claims, wherein the master (M) transmits the data telegram (20) to the adjacent slave (S).

5. Method according to one of the preceding claims, wherein the slave (S) stores measurement data and/or status data in at least one data section (I,O) of the data telegram (20).

6. Method according to one of the preceding claims, wherein the slave (S) reads control commands and/or process data from at least one data section (I,O) of the data telegram (20).

7. Method according to one of the preceding claims, wherein the master (M) stores control commands and/or process data in at least one data section (I,O) of the data telegram (20).

8. Method according to one of the preceding claims, wherein the arrangement of the data sections (I,O) is tailored to the topology of the bus system (2).

9. Method according to one of the preceding claims, wherein the topology of the bus system (2) is configured at least partially as a linear, ring and/or tree-type structure.

10. Method according to one of the preceding claims, wherein the data telegrams (20) are used for clock pulse synchronisation of the bus system (2).

11. Method according to one of the preceding claims, wherein at least some of the slaves (S) and/or the master (M) transmit at least one data telegram (20) at the same time to the adjacent slave (S) and/or master (M).

12. Method according to one of the preceding claims, wherein at least some of the slaves (S) and/or the master (M) receive at least one data telegram (20) at the same time from the adjacent slave (S) and/or master (M).

13. Method according to one of the preceding claims, wherein the slave (S) defines a difference between its own clock pulse and the clock pulse of the master (M), taking into account the data telegram transit time.

14. Method according to one of the preceding claims, wherein the slave (S) defines the difference in respect of the clock pulse of the master (M), taking into account the data telegram transit time and the time of arrival of a data telegram (20) and its own clock pulse.

15. Method according to one of the preceding claims, wherein the slave (S) corrects the difference between its own clock pulse and the clock pulse of the master (M) automatically.

16. Automation system with automation devices communicating via a bus system (2) wherein
- a first automation device is configured as the master (M) and at least one second automation device is configured as the slave (S),
- data transmission is provided by means of data telegrams (20),
- the data telegram (20) contains a data segment (5) provided for user-data,
- the data segment (5) for user-data contains at least one data section (I,O) provided for the master (M) and/or the slaves (S),
- the master is provided to generate and/or modify and/or delete the data telegrams (20), and
- at least one slave (S) is provided to generate and/or modify and/or delete at least one data telegram (20), at least one data segment and/or at least one data section (I, 0), the slave being configured in such a manner that it
- takes from the data telegram (20) data which is present in a data section intended for it, and
- inserts a new data section which contains input data for the master (M).

17. Automation system according to claim 16, wherein data transmission is provided by means of data telegrams (20) of a higher-order data network, in particular a data network based on the internet protocol.

18. Automation system according to claim 16 or 17, wherein at least one data section (I,O) of the data telegram (20) is provided for the measurement data and/or status data of the slave (S).

19. Automation system according to one of claims 16 to 18, wherein at least one data section (I,O) of the data telegram (20) is provided for control commands and/or process data of the slave (S).

20. Automation system according to one of claims 16 to 19, wherein the arrangement of the data sections (I,O) is tailored to the topology of the bus system (2).

21. Automation system according to one of claims 16 to 20, wherein a linear, ring and/or tree-type structure is provided at least partially for the topology of the bus system (2).

22. Automation system according to one of claims 16 to 21, wherein the data telegrams (20) are provided for clock pulse synchronisation of the bus system (2).

## Revendications

1. Procédé d'optimisation du débit effectif de transmission de données dans un système de bus (2), en particulier en technique d'automatisation, procédé dans lequel
- le système de bus (2) présente un maître (M) et au moins un esclave (S),
- la transmission de données est prévue au moyen de télégrammes de données (20),
- le télégramme de données (20) contient un segment de données (5), prévu pour les données utiles,
- le segment de données (5) pour les données utiles contient au moins une partie de données (I,O), prévue pour le maître (M) et/ou les esclaves (S),
- les télégrammes de données (20) sont générés et/ou modifiés et/ou supprimés par le maître (M), et
- au moins un télégramme de données (20), au moins un segment de données et/ou au moins une partie de données (I, 0) est généré(e) et/ou modifié(e) et/ou supprimé(e) par au moins un esclave (S), ledit esclave
- prélevant dans le télégramme de données (20) des données se trouvant dans une partie de données qui lui est destinée, et
- insérant une nouvelle partie de données, contenant des données d'entrée pour le maître (M).

2. Procédé selon la revendication 1, dans lequel la transmission de données est prévue au moyen de télégrammes de données (20) d'un réseau de données prioritaire, en particulier d'un réseau de données basé sur le protocole Internet.

3. Procédé selon la revendication 1 ou 2, dans lequel l'esclave (S) transmet le télégramme de données (20) à l'esclave (S) voisin ou au maitre (M) voisin.

4. Procédé selon l'une des revendications précédentes, dans lequel le maître (M) transmet le télégramme de données (20) à l'esclave (S) voisin.

5. Procédé selon l'une des revendications précédentes, dans lequel l'esclave (S) dépose les données de mesure et/ou données d'état dans au moins une partie de données (I, O) du télégramme de données (20).

6. Procédé selon l'une des revendications précédentes, dans lequel l'esclave (S) extrait les instructions de commande et/ou données de processus d'au moins une partie de données (I, O) du télégramme de données (20).

7. Procédé selon l'une des revendications précédentes, dans lequel le maître (M) dépose les instructions de commande et/ou données de processus dans au moins une partie de données (I, O) du télégramme de données (20).

8. Procédé selon l'une des revendications précédentes, dans lequel la disposition des parties de données (I, O) est adaptée à la topologie du système de bus (2).

9. Procédé selon l'une des revendications précédentes, dans lequel la topologie du système de bus (2) forme, au moins en partie, une structure linéaire, annulaire et/ou arborescente.

10. Procédé selon l'une des revendications précédentes, dans lequel les télégrammes de données (20) sont utilisés pour la synchronisation d'horloge du système de bus (2).

11. Procédé selon l'une des revendications précédentes, dans lequel au moins une partie des esclaves (S) et/ou des maîtres (M) transmettent au moins un télégramme de données (20) simultanément à l'esclave (S) voisin et/ou au maître (M) voisin.

12. Procédé selon l'une des revendications précédentes, dans lequel au moins une partie des esclaves (S) et/ou des maîtres (M) reçoivent au moins un télégramme de données (20) simultanément de l'esclave (S) voisin et/ou du maître (M) voisin.

13. Procédé selon l'une des revendications précédentes, dans lequel l'esclave (S) détermine un écart entre sa propre horloge et celle du maître (M) en tenant compte du temps de parcours d'un télégramme de données.

14. Procédé selon l'une des revendications précédentes, dans lequel l'esclave (S) détermine l'écart par rapport à l'horloge du maître (M) en tenant compte du temps de parcours d'un télégramme de données et du moment de l'arrivée d'un télégramme de données et de sa propre horloge.

15. Procédé selon l'une des revendications précédentes, dans lequel l'esclave (S) corrige automatiquement l'écart entre sa propre horloge et celle du maître (M).

16. Système d'automatisation comprenant des appareils d'automatisation qui communiquent via un système de bus (2), système dans lequel
- un premier appareil d'automatisation est configuré en tant que maître (M) et au moins un deuxième appareil d'automatisation en tant qu'esclave (S),
- la transmission de données est prévue au moyen de télégrammes de données (20),
- le télégramme de données (20) contient un segment de données (5), prévu pour les données utiles,
- le segment de données (5) pour les données utiles contient au moins une partie de données (I, O), prévue pour le maître (M) et/ou les esclaves (S),
- le maître est prévu pour générer et/ou modifier et/ou supprimer les télégrammes de données (20), et
- au moins un esclave (S) est prévu pour générer et/ou modifier et/ou supprimer au moins un télégramme de données (20), au moins un segment de données et/ou au moins une partie de données (I, O), ledit esclave étant configuré de telle manière qu'il
- prélève dans le télégramme de données (20) des données se trouvant dans une partie de données qui lui est destinée, et
- insère une nouvelle partie de données, contenant des données d'entrée pour le maître (M).

17. Système d'automatisation selon la revendication 16, dans lequel la transmission de données est prévue au moyen de télégrammes de données (20) d'un réseau de données prioritaire, en particulier d'un réseau de données basé sur le protocole Internet.

18. Système d'automatisation selon la revendication 16 ou 17, dans lequel au moins une partie de données (I, O) du télégramme de données (20) est prévue pour les données de mesure et/ou données d'état de l'esclave (S).

19. Système d'automatisation selon l'une des revendications 16 à 18, dans lequel au moins une partie de données (I, O) du télégramme de données (20) est prévue pour les instructions de commande et/ou données de processus de l'esclave (S).

20. Système d'automatisation selon l'une des revendications 16 à 19, dans lequel la disposition des parties de données (I, O) est adaptée à la topologie du système de bus (2).

21. Système d'automatisation selon l'une des revendications 16 à 20, dans lequel une structure linéaire, annulaire et/ou arborescente est prévue, au moins en partie, pour la topologie du système de bus (2).

22. Système d'automatisation selon l'une des revendications 16 à 21, dans lequel les télégrammes de données (20) sont prévus pour la synchronisation d'horloge du système de bus (2).
